# EUROPEAN PATENT APPLICATION

(11) **EP 2 273 353 A1**
(43) Date of publication of application: **12.01.2011**
(21) Application number: 09164794.1
(22) Date of filing: 07.07.2009
(51) Int. Cl.: G06F 3/041, B60K 37/06

(54) **Improved human machine interface**

(71) Applicant: Ford Global Technologies Inc., Dearborn, MI 48126 (US)
(72) Inventor:
(74) Representative: Widahl, Jenny Marie

(57) **Abstract**

The present invention relates to a human machine interface arrangement. The arrangement comprises a display module (170) having a display means (13) for displaying selectable data, and a control and selection module (160) for selecting between the displayed selectable data by means of a body part (11). The arrangement further comprises a body part detection module (100) for capturing the position of the body part (11) with respect to the control and selection module (160). The body part detection module (100) is further arranged to communicate directly or indirectly with the display module (170) to provide for an image representative of the body part (11) on the display means (13) to thereby enable a remote touch screen on the display means (13). The present invention provides for an arrangement which readily can separate the display means from the control and selection device while maintaining the advantages of a regular control and selection module.

## Description

### TECHNICAL FIELD

The present invention relates to a human machine interface arrangement for providing a remote touch screen enabling a user to remotely interact with a display screen for the purpose of entering decisions, selections commands and/or information.

### BACKGROUND OF THE INVENTION

The information society is more and more integrated with our vehicles, not to mention in the automobile industry. For a passenger, and especially for a driver, interacting with information systems, decision systems, navigational systems, etc can be a tradeoff with the time the user spends on concentrating on driving. For example, when entering the address on a GPS, usually several letters long, the driver's attention is required on both the driving and the inputting of the letters. This gets even more problematic if the screen of the GPS is positioned so that the user needs to adapt his or her vision when changing focus from a long distance, such as from the vehicle 100 m ahead, to a significantly shorter distance, e.g. to the dash board.

US 6703999 discloses a computer user interface in a transport vehicle where the part of the interface usable by driver may be located between the upper frame and the middle of the steering wheel. This area may be illuminated by infrared light from LEDs (Light Emitting Diodes) and movement of the user's fingers or hands are registered on a projected screen. The screen can be projected onto the front windscreen of the vehicle, on the dashboard or on the instrument panel. The solution permits a driver to press or indicate a selected parameter directly on a windscreen. An alternative solution to US 6703999 seems to be disclosed in DE 10147940. The document describes an arrangement in a vehicle with a user panel and a camera for detection of objects, such as fingers put on the user panel in order to detect if any of the elements on the user panel have been activated by the user. This user panel may either be projected by the camera itself onto, for example, the middle console of a vehicle, or the middle console of the vehicle may comprise a foil with the different user elements printed on it which the user may press and which are then detected by the camera. After the pressing of the any of the elements on the user panel, the system may perform functions associated with the element, such as turning on the radio, the air conditioning or other functions.

Furthermore, US 7289645 discloses a system for hand pattern recognition in a vehicle where the system comprises a hand pattern recognition zone close to the steering wheel and the driver of the vehicle. The hand pattern recognition zone is illuminated by a camera which registers hand motions or gestures in the zone and translates these into commands to be performed in the vehicle. In order to facilitate concentration on the roadway and minimize distraction for the driver, the zone is located at a distance convenient for the driver.

US 7084859 discloses a human machine interface in a vehicle where the user interface part may comprise a touch sensitive screen which may be located at a distance close to the driver and where pressure exhibited by the driver's finger, for example, may effectuate different functions in the vehicle. Pressure on the user interface may be detected by a camera placed behind the user interface detecting minute movement of the user interface surface.

The above mentioned solutions have however at least one drawback. They still have not fully enabled a human machine interface which permits a user to concentrate on driving while actively selecting between numbers of selectable parameters on a screen or which reduces the adjustment time of the eyes when changing focus from driving to a display screen. The safety of the driver and any other occupant in a vehicle can be jeopardized and that arrangements reducing these risks are highly desirable.

### SUMMARY OF THE INVENTION

It is therefore an object of the present invention to at least partly overcome the drawbacks mentioned above. It is an object of the present invention to at least partly reduce the distractions which a user may be subjected to when using a body part to select between numbers of selectable parameters. The above mentioned drawbacks are at least partly solved or leveled out by a human machine interface arrangement according to the present invention. The arrangement comprises a display module with a display means, such as a screen, for displaying selectable data, e.g as a background, and a control and selection module for selecting between the displayed selectable data by means of a body part. The arrangement further comprises a body part detection module for capturing the position of the body part with respect to the control and selection module. The body part detection module is further arranged to communicate directly or indirectly with the display module to provide an image representative of the body part on the display means, e.g. superimposed on the background, while enabling to remotely select between said displayed selectable data.

The present invention provides for an arrangement which enables a display means, e.g. a display screen to be positioned at a substantial distance from the user, for example when used in an automotive the display screen can be positioned just below front wind shield. Because of the arrangement, the user can control and select data on the display screen by inputting commands on the control and selection module, which can be readily separated from the display module. Meanwhile the body part detection module detects the position of the user's body part, with respect to the control and selection module, hence a relative positioning is achieved. The body part is further superimposed on the background enabling a user to actually see his/her e.g. body part during the selection operation displayed on the display means, e.g. as a foreground to the background. This can help a user when inputting decision, selections, text, commands, information, symbols or the like. It is further helpful since the arrangement can reduce the adjustment time of the eyes when moving focus from the area in front of e.g. the automobile to the display screen, as the display screen can be positioned at a substantial distance from the control and selection module. In a way, the present invention provides for a remote or virtual touch screen on the display means.

The body part detection module is advantageously a camera as this provides for a simple yet effective capturing of the body part.

The control and selection module is advantageously a touch sensitive input unit, such as a touch pad. This configuration will simplify the superposition of the captured body part onto the display screen as the touch sensitive input unit directly can be made to correlate with the display screen. It is even more advantageous if the touch sensitive input unit comprises an input surface with a first form and area, and in that the display screen comprises a background with a substantially equal form and area. This enables the input surface of the touch sensitive input unit to be directly correlated with the surface of the display screen, which makes the arrangement more user friendly.

The touch sensitive input unit has an upper surface on which a user can drag, move and place his/hers e.g. fingers for input of selections, decisions or the like. As the user drags his finger across the upper surface, the superimposed finger on the background moves accordingly, permitting the user to easily track his/her finger motion. Moreover, the display screen advantageously has a graphic background, and the input surface of the touch sensitive input unit is synchronized with the graphic background of the display screen in terms of that the perceived distance between the captured body part and input surface, and the image representing the body part and the graphic background are made to correlate. This provides the user with a better 3D perspective of the superimposed body part with respect to the display screen.

In an embodiment according to the present invention, the image representative of the body part is the actual image of the body part. Optionally the body part can be made slightly transparent to provide the user with a better view of the display screen. As a further option, the image of the body part can be replaced with a digital image of e.g. a pointer, which would simplify actions requiring precision or e.g. by the hand of a comic character. Optionally a virtual shadow to the image representing the body part can be introduced enabling an even better 3D perception of the operation. Optionally if the body part detection device captures an existing shadow of the captured body part, such shadow can be reinforced digitally if necessary.

In an embodiment according to the present invention, the arrangement comprises an Electronic Control Unit (ECU) arranged to communicate with the display module, as an example, the ECU can be a computer, or a microprocessor. The ECU is in turn communicating with at least module. The arrangement comprises a control and selection module which can be arranged as a sub module to the ECU, as will be described in greater detail below. This enables the signal from the control and selection module to be processed, synchronized and/or intermeshed together with signals form sub modules. For example the at least one sub module can be an infotainment module, driver's information module, additional instruments module or the like.

In an embodiment according to the present invention, the body part detection module and the ECU can be arranged to communicate with a mixer module, the mixer module in turn is arranged to communicate with the display module. This is a simple, yet efficient, way to process, synchronize and/or intermesh the signals from each module to get the superimposed body part on the background of the display screen, e.g. the graphic background. The body part can be a body limb, finger, iris. It can be an artificial body part, such as an artificial body limb. I can also be an object manipulated by a human being, such as a pen.

The present invention also relates to a vehicle, such as a train, an aircraft, a space shuttle, a boat, but preferably an automobile such as a car, comprising the arrangement as described above. However, the present invention can also be used in helmets or other headwear, with game consoles, computers, or together with other gadgets.

### BRIEF DESCRIPTION OF THE DRAWINGS

The present invention will be described in greater with reference to the accompanying figures in which;
figure 1 shows the instrument panel of an automobile as seen from the rear of the automobile;
figure 2 shows a schematic flowchart of the different modules used in an embodiment according to the present invention and;
figure 3 shows the schematic flowchart, as seen in figure 2, exemplified by way of an embodiment according to the present invention.

### DETAILED DESCRIPTION OF PREFERRED EMBODIMENTS

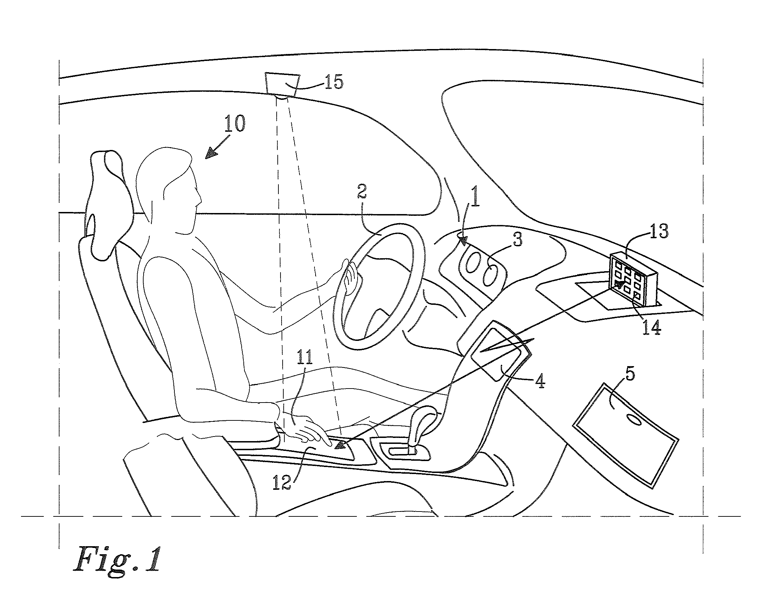

Figure 1 shows a schematic view of the interior of a vehicle, in which figure 1 shows a view from the side slightly towards the front of the vehicle. More specifically, figure 1 shows the instrument panel 1 of the vehicle. The instrument panel comprises a steering wheel 2, driver information instruments 3, such as a speedometer and a revolution counter, a CD player 4 and a glove compartment 5. Further seen is a driver 10 having a hand 11 comfortably rested on an armrest.

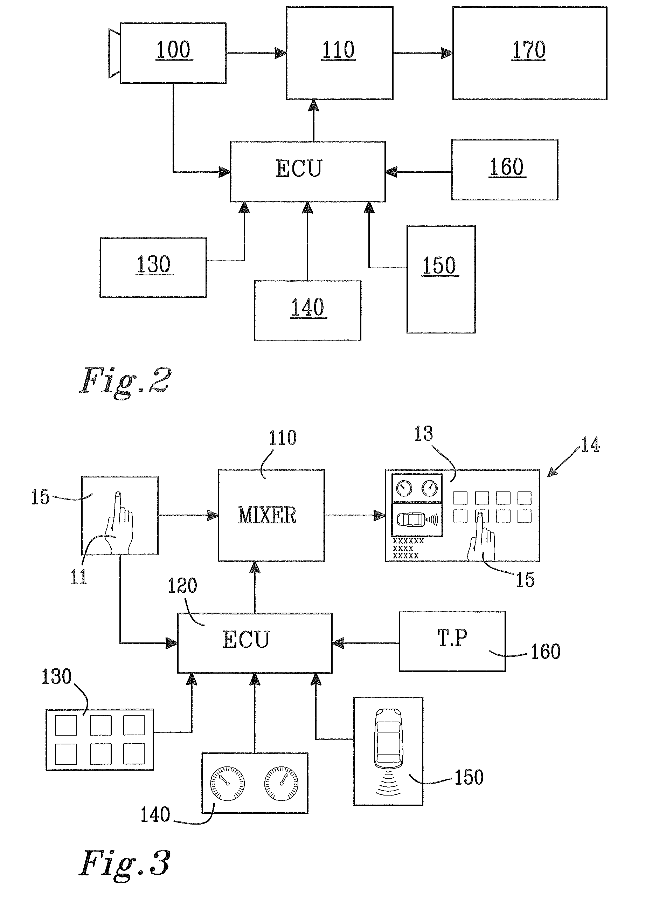

The hand 11 of the driver 10 is centered above a touch pad 12 for touch input or selection of e.g. decisions. The decisions can be based on a selectable number of parameters displayed on a screen 13. A camera 15 detects the position of the hand 11 with respect to the touch pad 12 and sends the captured image to a media mixer unit, as illustrated in figure 2. The motion of the hand 11, or any body limp of the driver 10, can thus be detected and tracked. The screen 13 displays a selectable number of parameters which can be selected by means of touching the touch pad 12 with the hand 11 on an input surface the touch pad 12. The screen 13 and the touch pad 12 are separated from each other. For example, the screen 13 can be positioned as close as possible to the wind shield as possible while the touch pad 12 is positioned at a comfortable and safe distance from the driver 10.To simplify the selection of displayed parameters on the screen 13 and which are selectable via the touch pad 12, the image of the hand 11 is superimposed on the screen 13 to enable the screen 13 with the function of a remote touch screen. The remote touch screen enables the driver 10 to "virtually" touch the screen 13 via the superimposed hand 15, i.e. the image of the hand 11, on the screen 13.

The driver 10, when traveling with the vehicle, can easily select different functions/parameters by selecting the selectable data on the screen 13 with the touch pad 12, while at the same time see the superimposed hand 15 on the screen 13. As the screen 13 is positioned on the instrument panel 1, and preferably at a position as far away from the driver 10 as possible, the driver's eye needs less time to adjust the changed depth of field when moving its focus from the road to the screen 13. Hence a safer selection of parameters can be made.

Figure 2 shows a schematic flow chart of different modules, illustrated as boxes, with a specified reference number for that module, utilized in an embodiment according the present invention. Each module will first be described in principle, whereafter a specific example is given with reference to figure 3.

Figure 2 shows a body part detector module 100 which is communicating with a mixer module 110. The body part detector module 100, e.g. a camera, motion detector, or the like, can be connected to the mixer module 110 by means of wireless communication, Bluetooth or WLAN or the like, or optionally by wires, for dual way communication. When a camera is used, it is preferably a camera with a night vision mode, which can detect light outside of the visual range and/or optionally light with very low, preferably substantially zero, amount of Lux. A display module 170 is communicating with the mixer module 110 as will be described below.

The mixer module 110 is a module which can handle a plurality of input signals and by means of electronic circuits, digital treatment or the like, assemble two or more signals in the output signal. The mixing can be done in real time or for shaping or editing purposes. The mixer module 110 further preferably synchronizes the at least two incoming signals and/or is adapted to buffer at least one frame.

An electronic control unit (ECU) 120 is arranged to communicate with the mixer module 110 by means of wireless communication, Bluetooth or WLAN or the like, or optionally by wires. The ECU is arranged to receive or actively assemble information from a plurality of sub modules. For example, and as shown in figure 2, from infotainment modules 130, driver information modules 140, additional instruments module 150 and a control and selection device 160. The ECU can comprise a graphic rendering unit or optionally such a graphic rendering unit can be arranged in at least one of the sub modules, i.e. the infotainment module 130, driver information module 140, additional instruments module 150, and/or the control and selection module 160. The graphic rendering unit renders the graphic shown on the display module 170, also referred to as the graphic background, background in the sense that the superimposed image/data from the body part detection module 100 can be considered as the foreground. The mixer module 110 may optionally be a part of the ECU 120 or the display module 170.

As is shown with the arrow in figure 2, the body part detection module may be communicating with the ECU or directly with the mixer module 110 dependent on which functions are desirable. For example, if the body part detection module is a camera, the camera can be set to initiate a control algorithm as soon as a motion is detected. The control algorithm can be set to identify the driver's hand and thereby the driver and his/her preferences, or similar actions. Such preferences can be a pre selected setup of modules which are to be initiated and displayed on the display module 170 for optional manipulation via the control and selection module 160.

Communicating with the ECU is an infotainment module 130 enabling a driver to use CD, DVD, radio, TV, internet, selections of intranets, video options, game options, or the like. For example, the infotainment module 130 may comprise the CD/DVD player which is visually illustrated with its functions on the display module 170.

The driver information module 140 enables a driver to access information concerning the vehicle and information relevant for the driving the vehicle. For example, such information can be the speed of the vehicle, the revolutions per minute of the engine, the oil pressure, the engine temperature, or the like.

The additional instruments, as mentioned with reference number 150, can be any additional instrument which might be appropriate to simply display on the display module or to display on the display module 170 for selectable decisions, information and/or visual illustration purpose(s). For example, back, front and/or side vehicle radar, driving lane warning (DLW), blind spot detection (Blis), distance alert (DA), adaptive cruise control (ACC), lane keeping aid (LKA), AntiBlock System (ABS), Anti-lock Brake System, Climate Control Module (CCM), Differential Electronic Module (DEM-steering unit for 4-wheel drive), Engine Control Module (ECM), Electronic stability programme (ESP), Power Seat Module (PSM), Sun Roof Module (SRM), Supplemental Restraint System (SRS), Transmission Control Module (TCM), Global Positioning system (GPS), Weather Forecast System (WFS), or the like.

The control and selection module 160 is arranged to permit a driver to select different parameters displayed as selectable parameters on the display module 170. For example, the display module 160 can be a touch pad, a hand pattern switch device which recognizes a specific motion or pattern of the hand, e.g. as described in US 7,289,645 B1, or the like.

Display module 170 is arranged to display the information from all or a selection of the sub modules of the ECU 120, for example the infotainment module 130, driver information module 140, additional instrument module 150 and a control and selection device 160. The display module can be a Heads Up Display (HUD), a LCD screen, plasma screen, a touch screen, or the like. It should be noticed that the display module 170 can comprise 1, 2, 3, 4, 5 or more screens separated or positioned together. For example one screen can be arranged to receive data from the driver information module 160 while another screen is arranged to receive data from the ECU 120 or the mixer module 110. In all the cases, the image representative of the body part can be superimposed on each of the backgrounds of the screens to provide a plurality of remote touch screens.

Hereafter, and with reference to figure 3 and figure 1, a machine interface arrangement according to an embodiment of the present invention will be described. The human machine interface arrangement is arranged in a vehicle, in this case an automobile. Figure 3 shows the captured image of the driver's hand 11 by the camera 15. The camera 15 has a capture zone adapted adjustable and adapted to fit with the specific user and positioned above the touch pad 12. As the camera 15 identifies the driver's hand 11, it adjusts the capture zone so that a clear signal, i.e. a clear image of the driver's hand 11 is received. The camera 15 communicates the signal to the media mixer 110.

Meanwhile, the infotainment module 130, in this case a media player, is transmitting a graphical layout of different buttons, such as play, stop, volume control, etc. to the ECU 120. The driver information module 140, collects data from the vehicle internal sensors and transmits the vehicle's speed and revolutions per minute to the ECU 120. The driver 10 has a pre set condition to always show an image of the vehicle connected to the readings of the back radar, as an additional instrument module 150, hence this module collects the readings from the back radar and transmits this signal to the ECU 120. The ECU 120 is further on stand by awaiting instructions from the control and selection module 160, in this case the touch pad 12 as shown in figure 1.

The touch pad 12 has a corresponding size as the screen 13 so that the motion of the driver's hand 11 can be directly translated to the screen 13 without compressing the image from the camera 15. Should it be desirable to compress, or even increase the image captured, this can be done via the ECU 120 or optionally in the media mixer 110. In this embodiment, the screen 13 and the touch pad 12 has a rectangular form with about 25.4 cm (10 inches) along the diagonal. The touch pad 12 has an input surface which is treated to reduce reflections from external light sources, such as the sun, and to enable a simple detection and tracking of the driver's hand 11.

The output signal from the ECU 120 and the output signal from the camera 15 are mixed and synchronized and redirected to the screen 13. The driver 10 can thereafter by simple drag'n'drop actions remotely control and select from the displayed menu on the screen 13 via pointing, dragging and touching the touch pad 12 with his fingers. Meanwhile, to simplify this operation the driver's hand 11 is displayed superimposed on the graphic background 14 of the screen 13. The touch pad 12 is of course synchronized with the graphic background 14 rendered by e.g. the ECU's 120 graphic rendering unit so that the modules have similar X-Y coordinates enabling a better touch selection function correlating to the displayed items on the screen 13, i.e. the background.

The image captured by the body part detection module, e.g. the camera 15, can be digitally or analogically manipulated. For example, the ECU can replace the image of the driver's 10 hand 11 with a digitally rendered hand, such as a hairy hand of a monster or a comic figure. The hand 11 can be optionally replaced by a pointer, which can be more advantageous if the displayed menu requires precise operations or, for drivers with larger hands. An advantage such as simplified handling can thereby be achieved.

The image can further be increased or decreased in strength, for example, the superimposed hand 15 is preferably made slightly transparent over the graphic background 14 so that a user, in the above mentioned case, the driver 10, can see the selectable parameters displayed on the screen 13 underneath his hand 11. In this sense, this remote touch screen, or "virtual" touch screen, can be said to be even better than a standard touch screen as such, since a standard touch screen will always suffer from the disadvantage that the user's hand is obstructing the line of sight.

Optionally the image representative of the body part can be superimposed on the displayed selectable data. Optionally the control and selection module can be located at a distance greater than 0.3 meters from the display means. Optionally the body part detection module is (100) is arranged to recognize a particular user (using biometric data for example) and user-specific selectable data on said display means.

## Claims

1. A human machine interface arrangement comprising a display module (170) having a display means (13) for displaying selectable data and
a control and selection module (160) for selecting between said displayed selectable data by means of a body part (11),
**characterized in**
**that** said arrangement further comprises a body part detection module (100) for detecting the position and/or movement of said body part (11) with respect to said control and selection module (160) and,
**that** said body part detection module (100) is arranged to communicate directly or indirectly with said display module (170) to provide for an image representative of said body part (11) on said display means (13) while enabling to remotely select between said displayed selectable data.

2. The arrangement according to claim 1, **characterized in that** said body part detection module (100) is a camera (15).

3. The arrangement according to claim 1 or 2, **characterized in that** said control and selection module (160) is a touch sensitive input unit, such as a touch pad (12).

4. The arrangement according to claim 3, **characterized in that** said touch sensitive input unit comprises an input surface with a first form and area, and **in that** said display means (13) is a display screen (13) which exhibits a substantially equal form and area.

5. The arrangement according to claim 3 or 4, **characterized in that** said touch sensitive input unit has an input surface, and said display means (13) has a background, and **in that** said input surface of said touch sensitive input unit is synchronized with the background of said display means (13).

6. The arrangement according to any preceding claims, **characterized in that** said image representative of said body part (11) is an image of said body part (11).

7. The arrangement according to any preceding claims, **characterized in that** said arrangement comprises an ECU (120) communicating with said display module (170) and **in that** said ECU comprises at least one module (130, 140, 150, 160).

8. The arrangement according to claim 7, **characterized in that** at least one module (130, 140, 150, 160) is selected from an infotainment module (130), drivers information module (140) and an additional instruments module (150).

9. The arrangement according to claim 7 or 8, **characterized in that** said control and selection module (160) is a module to said ECU (120).

10. The arrangement according to any of the claims 7-9, **characterized in that** said body part detection module (100) and said ECU (120) are arranged to communicate with a mixer module (110), and **in that** said mixer module (110) is arranged to communicate with said display module (170).

11. The arrangement according to any preceding claims, **characterized in that** said body part is a body limb, finger, iris, an artificial body part, or an object manipulated by a human being.

12. A vehicle comprising the arrangement according to any preceding claims.

13. The vehicle of claim 12, **characterized in that** said vehicle is an automobile, such as a car.
